# EUROPÄISCHE PATENTSCHRIFT

(11) **EP 0 893 937 B1**
(45) Veröffentlichungstag und Bekanntmachung des Hinweises auf die Patenterteilung: **02.03.2005**
(21) Anmeldenummer: 98110157.9
(22) Anmeldetag: 04.06.1998
(51) Int. Cl.: H05B 3/12, H05B 3/22, B60H 1/22, F16B 2/14

(54) **Elektrische Heizeinrichtung, insbesondere für ein Kraftfahrzeug**
Electric heating apparatus, particularly for vehicle
Appareil de chauffage électrique, en particulier pour un véhicule

(30) Priorität: 25.07.1997 DE 19732010
(43) Veröffentlichungstag der Anmeldung: 27.01.1999
(73) Patentinhaber: Behr GmbH & Co. KG, 70469 Stuttgart (DE)
(72) Erfinder: Demuth, Walter, Dipl.-Ing. (FH), 70839 Gerlingen (DE); Waldhelm, Torsten, Dipl.-Ing., Sioux Falls, SD 57104 (US)

(56) Entgegenhaltungen:
- DE-A- 4 434 613
- FR-A- 2 742 384
- US-A- 4 824 303

## Beschreibung

Die Erfindung betrifft eine elektrische Heizeinrichtung, insbesondere für ein Kraftfahrzeug gemäß dem Oberbegriff des Patentanspruchs 1.

Die Beheizung des Fahrzeuginnenraums bei Kraftfahrzeugen erfolgt üblicherweise mittels des Kühlwassers des Antriebsaggregates, so daß die in der Brennkraftmaschine entstehende Wärme bedarfsweise an die in den Fahrzeuginnenraum strömende Luft abgegeben wird. Diese Wärme steht jedoch erst nach einer bestimmten Betriebsdauer zur Verfügung, so daß insbesondere in der kalten Jahreszeit das Wirksamwerden der Heizung als unzureichend empfunden wird. Auch durch die Entwicklung neuer, verbrauchsoptimierter Motoren, in denen weniger Wärmeenergie anfällt und über das Kühlwasser abgeführt wird, steht zur Fahrzeugheizung eine geringere Wärmeenergie zur Verfügung, die bei extrem niedrigen Außentemperature keineswegs zur Fahrzeugheizung ausreicht und die auch bei normalem Heizungsbedarf erst bei erheblicher zeitlicher Verzögerung zu behaglichen Innenraumtemperaturen führt. Gleiches gilt für die Beheizung von ElektroFahrzeugen.

Aus den vorstehenden Gründen wurden bereits Zusatzheizungen vorgeschlagen, die in den Luftführungskanal eingesetzt werden und die Wärme an die in den Fahrzeuginnenraum strömende Luft abgeben. Die Anordnung einer Zusatzheizung zwischen einem Wärmetauscher einer Fahrzeugheizungsanlage und der Fahrzeugkabine ist beispielsweise in dem Aufsatz von **Burk, Krauss, Dr. Löhle "Integrales Klimasystem für Elektroautomobile", ATZ Automobiltechnische Zeitschrift, 11/1992,** beschrieben.

Es wurden bereits verschiedene Zusatzheizsysteme entwickelt. So ist aus der **EP 0 350 528** ein Radiator bekannt, der mehrere parallel angeordnete Heizelemente umfaßt, die zu einem Block zusammengesetzt und in einem Rahmen befestigt sind. Zwischen jeweils zwei Blechen sind PTC-Elemente gehalten und auf der jeweils anderen Seite der Bleche befindet sich eine mit diesen in wärmeleitender Verbindung stehende Wellrippe. Der Block ist gehalten in einem Halterahmen, der aus parallel zu den Heizelementen angeordneten äußeren Schienen besteht, die endseitig in Holme eingesteckt sind. Die einzelnen äußeren Schienen und Holme sind zur Bildung des Halterahmens miteinander verbunden. Zur Herstellung eines Wärmekontakts zwischen den Heizelementen und den Wellrippen ist zwischen dem Block und den äußeren Schienen ein längliches, gewelltes Federband angeordnet, das sich an der Schiene abstützt und gegen den Block drückt. Nachteilig an dieser bekannten Heizeinrichtung ist, daß wegen der Mehrteiligkeit der einzelnen Holme die Montage schwierig ist und darüber hinaus der Wärmekontakt nicht optimal ist, da sich bei Dickentoleranzen an manchen Stellen kein guter Flächenkontakt einstellt. Weiter ist der Toleranzbereich durch den Federweg des Federbandes auf einen kleinen Bereich eingeschränkt. Größere Spannkräfte können nicht durch das Federband auf den Heizblock übertragen werden.

Aus der **EP 0 575 649** ist eine gattungsgemäße Heizeinrichtung bekannt, bei der anstelle des gewellten Federbandes die Holme Ausbauchungen als federelastische Spannelemente aufweisen, die gegen den Block drücken. Nachteilig daran ist, daß auch hier der Toleranzbereich durch die Höhe der Ausbauchungen stark eingegrenzt ist und die Spannkräfte durch die Form der Ausbauchungen und das Material der Holme fest vorgegeben ist. Weiter nachteilig ist, daß die Spannkräfte in Abhängigkeit des Federweges je nach Breite des Blockes unterschiedlich sind.

Aus der **DE 44 34 613** ist eine Heizeinrichtung bekannt, deren Rahmen aus Kunststoff besteht. Der Rahmen ist in zwei Hälften geteilt, an denen Keile angeformt sind. Beim Zusammenfügen können sich die Keile verbiegen und so den Block verspannen. Nachteilig daran ist, daß ein Rahmen aus Kunststoff nur eine geringe Lebensdauer hat, da der Kunststoff insbesondere aufgrund der hohen Temperaturen altert und im Laufe der Zeit seine Stabilität verliert. Darüberhinaus erlaubt die Ausgestaltung des Rahmens nur sehr kleine Toleranzen. Auch die auf den Block übertragbaren Spannkräfte sind nur sehr gering.

Ausgehend von diesem Stand der Technik ist es Aufgabe der Erfindung, eine verbesserte, elektrische Heizeinrichtung bereitzustellen, die einfach aufgebaut ist und eine schnelle und einfache Montage ermöglicht, wobei trotz großer Toleranzen in der Breite des Blockes eine gute und gleichmäßige Verspannung der PTC-Elemente und Bleche gewährleistet sein muß, damit gute elektrische und wärmeleitende Kontakte zwischen den einzelnen Elementen vorhanden sind. Die Heizeinrichtung sollte so gestaltet sein, daß die Kraft, mit der der Block verspannt wird, sehr groß ausgelegt sein kann, damit eine verbesserte Wärmeabfuhr von den PTC-Elementen gewährleistet ist und damit eine höhere Heizleistung erreicht werden kann.

Diese Aufgabe wird erfindungsgemäß gelöst durch eine gattungsgemäße Heizeinrichtung mit den kennzeichnenden Merkmalen des Anspruchs 1.

Erfindungsgemäß besteht der Rahmen aus Längs- und Querschenkeln, wobei die Querschenkel zumindest an ihren Enden in zwei Endteile längsgeteilt sind und die Längsschenkel wenigstens an ihren mit den Querschenkeln verbundenen Enden im Querschnitt wenigstens einen keilartigen Bereich aufweisen und die Enden der Längsschenkel über ihre Teilflächen zwischen den Endteilen der Querschenkel eingespannt gehalten sind. Mit dieser Ausgestaltung der Längs- und Querschenkel lassen sich Blöcke mit unterschiedlichen Abmessungen mit jeweils der gleichen Spannkraft verspannen, so daß der Heizblock große Abmessungstoleranzen aufweisen kann und stets eine gleich gute elektrische und wärmeleitende Verbindung zwischen den einzelnen Elementen des Heizblocks gegeben ist. Die Kraft, mit der der Heizblock verspannt wird, kann sehr groß ausgelegt sein, so daß die erfindungsgemäße Heizeinrichtung höhere Heizleistungen liefern kann.

Bevorzugt sind die Längsschenkel als Profil ausgebildet, mit trapez- oder dreieckförmigem Querschnitt. Auf diese Weise sind die Längsschenkel einfach ausgestaltet und weisen eine große Stabilität auf, so daß der Heizblock über die Längsschenkel mit einer großen Kraft verspannt werden kann.

Vorteilhafterweise sind die Querschenkel jeweils in zwei Querschenkelhälften geteilt, die identisch ausgebildet sind. Hierdurch kann der Aufbau der erfindungsgemäßen Heizeinrichtung vereinfacht werden.

Bevorzugt weisen die Querschenkelhälften Anlageflächen auf, die an den Keilflächen anliegen, so daß die Längsschenkel entlang der Anlageflächen verschiebbar geführt sind, und der Heizblock korrekt verspannt werden kann.

Um eine hohe Stabilität des Rahmens zu erhalten und große Spannkräfte zu ermöglichen, bestehen die Rahmenschenkel bevorzugt aus Metall, vorzugsweise aus Aluminiumstrangpreßprofilen. Aluminium bietet insbesondere einen Gewichtsvorteil.

Ein Rahmen aus Metall bietet den weiteren Vorteil. daß über ihn die Stromzuführung durchgeführt werden kann. Dabei weisen die Querschenkelhälften vorzugsweise Befestigungselemente zur Festlegung der Bleche der Heizelemente auf, wobei ein Blech jeden zweiten Heizelementes dann über die Befestigungselemente festgelegt ist und je ein Blech der anderen Heizelemente jeweils ein elektrisches Anschlußelement aufweist. Dann kann jedem zweiten Heizelement über den Rahmen, die Querschenkel und die Befestigungsmittel Strom zugeführt werden und die restlichen Heizelemente sind separat über die elektrischen Anschlußelemente anschließbar. Alternativ könnte auch jedes Heizelement einen elektrischen Anschluß aufweisen. Der Heizblock ist vorteilhafterweise gegenüber den Längsschenkeln, die gegen den Heizblock drücken, isoliert.

Wenn die Querschenkelhälften lösbar miteinander verbunden sind, kann die erfindungsgemäße Heizeinrichtung zu Wartungs- oder Reparaturzwecken demontiert werden.

Ein gemäß Anspruch 13 vorgesehener, nach außen abragender Steg kann dazu dienen, andere Elemente an der erfindungsgemäßen Heizeinrichtung oder die Heizeinrichtung selbst an einem Bauteil festzulegen.

Im folgenden wird die Erfindung anhand von Ausführungsbeispielen unter Bezugnahmen auf die Zeichnung im einzelnen erläutert.

In der Zeichnung zeigen:
- **Fig. 1**: eine Ansicht einer erfindungsgemäßen Heizeinrichtung von der Luftanströmseite gesehen;
- **Fig. 2**: einen Querschnitt entlang der Linie II-II aus Fig. 1 in Explosionsdarstellung;
- **Fig. 3**: ein einzelnes Heizelement in Explosionsdarstellung;
- **Fig. 4**: eine Vorderansicht der Einzelteile des Heizelements gemäß Fig. 3;
- **Fig. 5,6,7**: Weitere Ausführungsformen in Querschnittsdarstellungen wie Fig.2;
- **Fig. 5a,6a, 7a**: die Ausführungsformen gemäß den Fig.5,6,7 im Querschnitt entlang der Linie III-III aus Fig.1 gesehen;

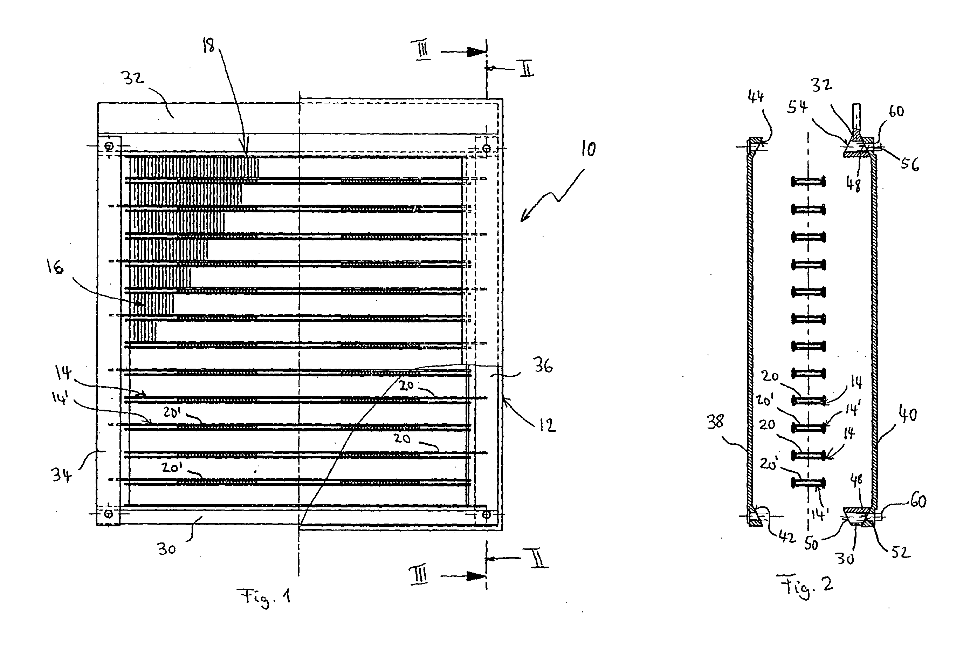

Eine in **Fig. 1** dargestellte Heizvorrichtung 10 weist mehrere in einem Rahmen 12 aufgenommene Heizelemente 14 und zwischen den Heizelementen angeordnete Wellrippen 16, die zusammen einen Heizblock 18 bilden, auf. Die Wellrippen 16 sind bevorzugt als Kiemenwellrippe zur Erhöhung der Leistung ausgebildet, wobei eine Wellrippenhöhe von 8 bis 16 mm und eine Wellrippentiefe, also Tiefe des Heizblocks 18, von 8 bis 14 mm bevorzugt ist.

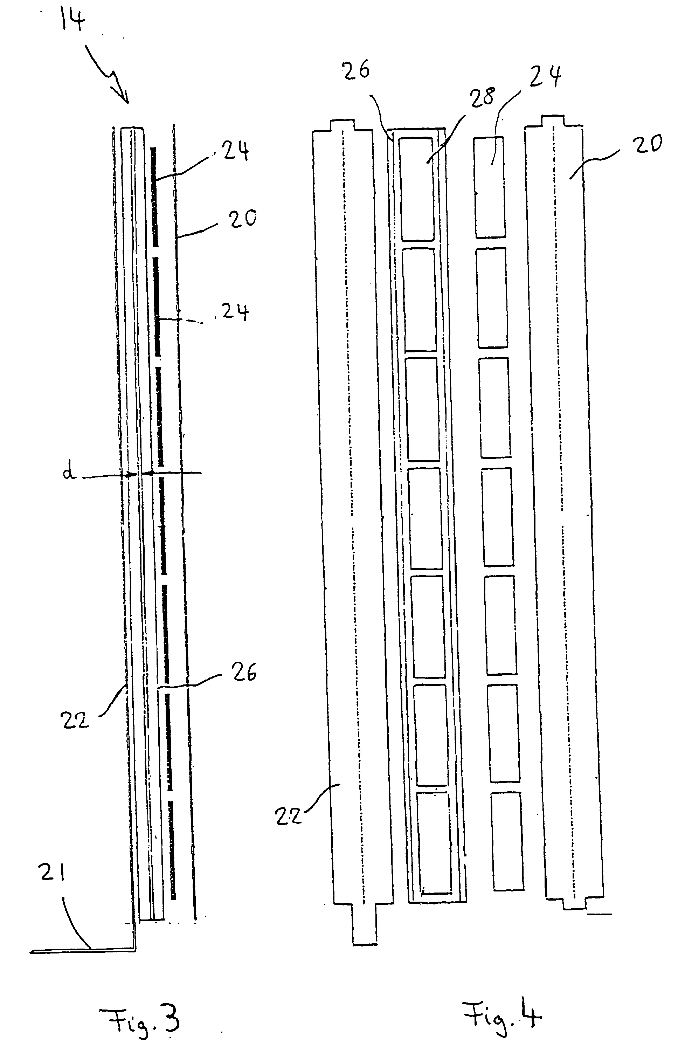

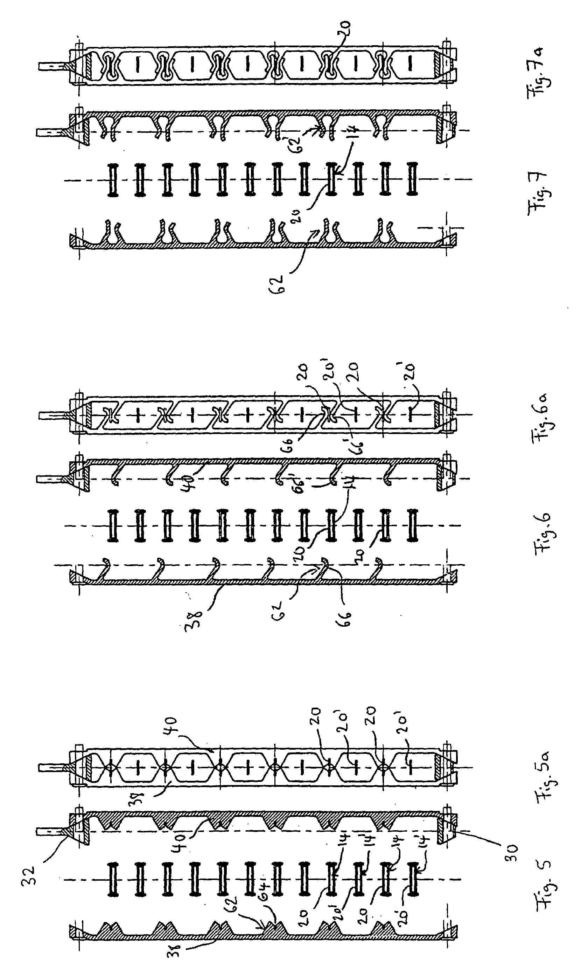

In den **Fig. 3** und **4** sind die einzelnen Elemente eines Heizelements 14 dargestellt. Das Heizelement 14 besteht aus zwei parallel verlaufenden Blechen 20, 22 zwischen denen sich mehrere PTC-Elemente 24 befinden. Die PTC-Elemente 24 sind gegen Verrutschen durch ein Dichtprofil 26 sicher gehalten und gegen Feuchtigkeit geschützt. Das Dichtprofil 26 ist aus einem extrudierten Endlosprofil, bevorzugt aus Silikon bestehend, hergestellt, das auf die dem Heizelement 14 entsprechende Länge zugeschnitten ist und in das Durchbrechungen 28 eingestanzt sind, in denen die PTC-Elemente 24 positioniert und auf Abstand gehalten sind. Das Dichtprofil 26 weist an seinen Längsrändern Rastlippen auf, die die Längsränder der Bleche 20, 22 umgreifen, so daß das Heizelement 14 im zusammengesetzten Zustand durch die über die Rastlippen gehaltenen Bleche 20, 22 zusammenhält. Damit ein guter Kontakt und eine gute Wärmeleitung zwischen den Blechen 20, 22 und den PTC-Elementen 24 gegeben ist, ist das Dichtprofil im Stegbereich zwischen den Durchbrechungen 28 mit Untermaß in der Dicke d zu den PTC-Elementen 24 ausgeführt. Die Dichtwirkung wird durch elastische Verformung der verdickten Stegbereiche erreicht.

Der Rahmen 12 besteht aus parallel zu den Heizelementen 14 angeordneten Längsschenkeln 30 und 32 sowie senkrecht dazu angeordeten Querschenkeln 34 und 36. Die Querschenkel 34 und 36 sind zumindest an ihren Enden in zwei Endteile längsgeteilt. Bevorzugt sind die Querschenkel 34 und 36 jedoch, wie in den Figuren dargestellt, über ihre volle Länge jeweils in zwei Querschenkelhälften 38 und 40 längsgeteilt. An ihren Enden weisen die Querschenkelhälften 38 und 40 jeweils eine Anlagefläche 42 und 44 bzw. 46 und 48 auf, wobei gegenüberliegende Anlageflächen 42 und 46 bzw. 44 und 48 jeweils einen Winkel einschließen, der zum Heizblock 18 hin geöffnet ist. Zwischen diesen Anlageflächen 42 bis 48 sind die Längsschenkel 30 und 32 gehalten, die wenigstens an ihren mit den Querschenkeln 34 und 36 verbundenen Enden im Querschnitt wenigsten einen keilartigen Bereich aufweisen, wie in **Fig. 2** dargestellt. Bevorzugt sind die Längsschenkel als Profil ausgebildet mit trapez- oder dreieckförmigem Querschnitt. Dabei bilden die Längsseiten der Längsschenkel 30 und 32 Keilflächen 50 und 52 bzw. 54 und 56.

Bei der Montage der erfindungsgemäßen Heizeinrichtung wird der Heizblock 18 in den Rahmen 12 eingelegt und die Querschenkelhälften 38 und 40 über Verbindungsmittel 60 miteinnder verbunden, wodurch aufgrund der Keilflächen 50 bis 56, die an den Anlageflächen 42 bis 48 anliegen, auf die Längsschenkel 30 und 32 eine Kraft in Richtung des Heizblocks 18 ausgeübt wird, so daß der Heizblock 18 zwischen den Längsschenkeln 30 und 32 verspannt gehalten ist. Unabhängig von den Heizblockabmessungstoleranzen, beispielsweise den Toleranzen in der Höhe H, wird die Spannkraft lediglich durch die Verbindungsmittel 60 bestimmt, also mit welcher Kraft die Querschenkelhälften 38 und 40 zusammengehalten sind.

Die Rahmenschenkel bestehen bevorzugt aus Metall, vorzugsweise aus Aluminium und sind als Strangpreßprofile ausgebildet. Die Verbindungsmittel 60 können lösbare Verbindungsmittel, wie Schrauben oder dergleichen sein. Sie können auch als unlösbare Verbindungsmittel, beispielsweise Vernietungen, ausgebildet sein.

In dem Ausführungsbeispiel nach den **Fig. 1** und **2** sind die Heizelemente 14 in dem Heizblock 18 lediglich durch Verspannung des Heizblocks 18 zwischen den Längsschenkeln 30 und 32 in dem Rahmen 12 gehalten. Jedes in der **Fig. 2** als oberes dargestellte Blech 20 jeden zweiten Heizelements 14 ist über ein elektrisches Abschlußelement 21, das beispielsweise durch einen abgewinkelten Endabschnitt 21 des Bleches 20 gebildet sein kann (**Fig. 3),** mit dem einen Pol einer elektrischen Versorgung verbunden. Jedes in der **Fig. 2** obere Blech 20' der anderen Heizelemente 14' ist ebenfalls über ein elektrisches Anschlußelement 21' mit dem anderen Pol der elektrischen Versorgung verbunden. Die einzelnen elektrischen Anschlüsse können gegeneinander isoliert sein, so daß einzelne Heizelemente separat abschaltbar, bzw. zuschaltbar sind.

Die **Fig. 5, 6** und **7** zeigen in Explosionsdarstellung weitere Ausführungsformen der erfindungsgemäßen elektrischen Heizeinrichtung, in denen die in den Figuren als obere dargestellte Bleche 20 jeden zweiten Heizelements 14 über von den Querschenkelhälften 38 und 40 abragende Befestigungelemente 62 festgelegt sind. Die Festlegung der Bleche 20 ist in den **Fig. 5a, 6a** und **7a** dargestellt. Über die Befestigungselemente 62 und damit über den Rahmen 12 sind die Bleche mit einer elektrischen Versorgung verbindbar sind. Der Rahmen befindet sich vorteilhafterweise dabei auf Massepotential. Die jeweils oberen Bleche 20' der anderen Heizelemente 14' weisen, wie die Bleche der Heizelemente des Ausführungsbeispiels nach den **Fig. 1 und 2**, elektrische Anschlußelemente auf. Diese elektrischen Anschlußelemente sind mit der elektrischen Versorgung verbunden.

Die einzelnen Ausführungsbeispiele nach den **Fig. 5 bis 7a** unterscheiden sich untereinander in der unterschiedlichen Ausführung der Befestigungsmittel 62. In dem Ausführungsbeispiel nach **Fig. 5 und 5a** werden die Enden der Bleche 20 zwischen zwei gegenüberliegenden Befestigungsmitteln 62, die jeweils einen Schlitz 64 aufweisen, eingeklemmt gehalten, wobei die Bleche 20 teilweise in die Schlitze 64 eingesteckt sind (Fig.5a). In dem Ausführungsbeispiel gemäß **Fig. 6 und 6a** sind die Befestigungsmittel 62 gebildet aus Haken 66, die gegen die Bleche 20 drücken, wobei gegenüberlliegende Haken 66 und 66' derart zusammenwirken, daß der Haken 66 von oben und der Haken 66' von unten gegen das Blech drücken, wie in **Fig. 6a** dargestellt. In dem Ausführungsbeispiel gemäß **Fig. 7 und 7a** sind die Befestigungselemente 62 gebildet aus einer Kombination der Befestigungsmittel 62 aus den Ausführungsbeispielen gemäß **Fig. 5 und 6**, wobei auch hier wieder gegenüberliegende Befestigungsmittel 62 und 62' zusammenwirken und dadurch jeweils das Blech 20 festlegen (**Fig.7a**).

## Patentansprüche

1. Elektrische Heizeinrichtung, insbesondere für ein Kraftfahrzeug mit mehreren zu einem Heizblock (18) zusammengesetzten, parallel angeordneten Heizelementen (14), die aus Blechen (20, 22) und zwischen diesen Blechen gehaltenen PTC-Elementen (24) gebildet sind und Wellrippen (16), die an den Blechen (20, 22) in wärmeleitender Verbindung anliegen, wobei der Heizblock (18) in einem Rahmen (12), der aus einzelnen parallel zu den Heizelementen (14) angeordneten Längsschenkeln (30, 32) und senkrecht dazu angeordneten Querschenkeln (34, 36), aufgebaut ist, gehalten ist, **dadurch gekennzeichnet, daß** die Querschenkel (34 und 36) zumindest an ihren Enden in zwei Endteile längsgeteilt sind und die Längsschenkel (30 und 32) wenigstens an ihren mit den Querschenkeln (34 und 36) verbundenen Enden im Querschnitt wenigstens einen keilartigen Bereich aufweisen und die Enden der Längsschenkel (30 und 32) über ihre Keilflächen (50 bis 56) zwischen den Endteilen der Querschenkel (34 und 36) eingespannt gehalten sind.

2. Heizeinrichtung nach Anspruch 1, **dadurch gekennzeichnet, daß** die Längsschenkel (44, 46) als Profile (60) ausgebildet sind mit trapezoder dreieckförmigem Querschnitt.

3. Heizeinrichtung nach Anspruch 1 oder 2, **dadurch gekennzeichnet, daß** die Querschenkel (34 und 36) über ihre volle Länge jeweils in zwei Querschenkelhälften (38 und 40) längsgeteilt sind.

4. Heizeinrichtung nach Anspruch 3, **dadurch gekennzeichnet, daß** die Querschenkelhälften (38 und 40) identisch ausgebildet sind.

5. Heizeinrichtung nach Anspruch 3 oder 4, **dadurch gekennzeichnet, daß** die Querschenkelhälften (38 und 40) Anlageflächen (42 bis 48) aufweisen, die an den Keilflächen (50 bis 56) anliegen.

6. Heizeinrichtung nach einem der Ansprüche 1 bis 5, **dadurch gekennzeichnet, daß** die Rahmenschenkel aus Metall, vorzugsweise Aluminium, bestehen und als Strangpreßprofile ausgebildet sind.

7. Heizeinrichtung nach einem der vorhergehenden Ansprüche, **dadurch gekennzeichnet, daß** zwischen dem Heizblock (18) und den Längsschenkeln (30 und 32) eine elektrische Isolation vorgesehen ist.

8. Heizeinrichtung nach einem der Ansprüche 3 bis 7, **dadurch gekennzeichnet, daß** die Querschenkelhälften (38 und 40) lösbar miteinander verbindbar sind.

9. Heizeinrichtung nach einem der Ansprüche 3 bis 8, **dadurch gekennzeichnet, daß** die Querschenkelhälften (38 und 40) Befestigungselemente (62) zur Festlegung der Bleche (20) aufweisen.

10. Heizeinrichtung nach Anspruch 9, **dadurch gekennzeichnet, daß** jeweils zwei, im zusammengebauten Zustand der Heizeinrichtung (10) gegenüberliegende Befestigungsmittel (62 und 62') zusammenwirken und zwischen sich ein Blech (20) eines Heizelement (14) festlegen.

11. Heizeinrichtung nach Anspruch 9 oder 10, **dadurch gekennzeichnet, daß** ein Blech (20) jeden zweiten Heizelementes (14) über die Befestigungsmittel (62) festgelegt ist und jeweils ein Blech (20') der anderen Heizelemente (14') jeweils ein elektrisches Anschlußelement (21) aufweisen.

12. Heizeinrichtung nach einem der vorhergehenden Ansprüche, **dadurch gekennzeichnet, daß** jedes Heizelement (14) einen elektrischen Anschluß (21) aufweist.

13. Heizeinrichtung nach einem der vorhergehenden Ansprüche, **dadurch gekennzeichnet, daß** wenigstens einer der Rahmenschenkel einen nach außen abragenden Steg aufweist.

## Claims

1. Electric heater, in particular for a motor vehicle, with a heating block (18) assembled from a plurality of parallel heating elements (14) comprising plates (20, 22) and PTC elements (24) held between said plates, and with corrugated fins (16) contacting the plates (20, 22) to conduct heat, whereby the heating block (18) is held in a frame (12) consisting of individual longitudinal legs (30, 32) extending parallel to the heating elements (14) and transverse legs (34, 36) extending at right angles thereto, **characterised in that** the transverse legs (34 and 36) are split longitudinally into two end sections at least at their ends and the longitudinal legs (30 and 32) have at least one wedge-like region at least at the ends joined to the transverse legs (34 and 36) and the ends of the longitudinal legs (30 and 32) are clamped between the end sections of the transverse legs (34 and 36) by way of their wedge surfaces (50 to 56).

2. Heater according to claim 1, **characterised in that** the longitudinal legs (44, 46) are designed as sections with a trapezoidal or triangular cross-section.

3. Heater according to claim 1 or 2, **characterised in that** the transverse legs (34 and 36) are split longitudinally into two transverse leg halves (38 and 40) over their full length.

4. Heater according to claim 3, **characterised in that** the transverse leg halves (38 and 40) are identical in design.

5. Heater according to claim 3 or 4, **characterised in that** the transverse leg halves (38 and 40) have contact surfaces (42 to 48) in contact with the wedge surfaces (50 to 56).

6. Heater according to any of claims 1 to 5, **characterised in that** the frame legs are made of metal, preferably aluminium, and designed as extruded sections.

7. Heater according to any of the preceding claims, **characterised in that** electric insulation is provided between the heating block (18) and the longitudinal legs (30 and 32).

8. Heater according to any of claims 3 to 7, **characterised in that** the transverse leg halves (38 and 40) are detachably joined to one another.

9. Heater according to any of claims 3 to 8, **characterised in that** the transverse leg halves (38 and 40) are provided with fasteners (62) for the location of the plates (20).

10. Heater according to claim 9, **characterised in that** two fasteners (62 and 62') located opposite one another in the assembled state of the heater (10) act together to locate a plate (20) of a heating element (14) between themselves.

11. Heater according to claim 9 or 10, **characterised in that** a plate (20) of each alternate heating element (14) is located by the fasteners (62) while a plate (20') of the other heating element (14') is provided with an electrical connecting element (21).

12. Heater according to any of the preceding claims, **characterised in that** each heating element (14) has an electrical connection (21).

13. Heater according to any of the preceding claims, **characterised in that** at least one of the frame legs has a web projecting outwards.

## Revendications

1. Appareil de chauffage électrique, en particulier pour un véhicule automobile, comprenant plusieurs éléments chauffants (14) disposés de façon parallèle et regroupés pour former un bloc chauffant (18), lesquels éléments chauffants sont formés par des tôles (20, 22) et par des éléments (24) à coefficient positif de température (PTC) maintenus entre ces tôles, et des nervures ondulées (16) qui, par liaison conductrice de la chaleur, sont contiguës aux tôles (20, 22), où le bloc chauffant (18) est tenu dans un cadre (12) qui est constitué de différents côtés longitudinaux (30, 32) disposés de façon parallèle aux éléments chauffants (14) et de côtés transversaux (34, 36) disposés de façon perpendiculaire à ces côtés longitudinaux,
**caractérisé**
**en ce que** les côtés transversaux (34 et 36), au moins au niveau de leurs extrémités, sont divisés longitudinalement en deux parties d'extrémités, et les côtés longitudinaux (30 et 32) présentent au moins au niveau de leurs extrémités reliées aux côtés transversaux (34 et 36), au moins une zone ayant en section une forme de coin, et les extrémités des côtés longitudinaux (30 et 32) sont maintenues encastrées par leurs surfaces en forme de coin (50 à 56), entre les parties d'extrémités des côtés transversaux (34 et 36).

2. Appareil de chauffage selon la revendication 1, **caractérisé en ce que** les côtés longitudinaux (44, 46) sont conformés comme des profilés (60) ayant une section en forme de trapèze ou de triangle.

3. Appareil de chauffage selon la revendication 1 ou 2, **caractérisé en ce que** les côtés transversaux (34 et 36), sur toute leur longueur, sont divisés dans le sens de la longueur, respectivement en deux moitiés (38 et 40) des côtés transversaux.

4. Appareil de chauffage selon la revendication 3, **caractérisé en ce que** les moitiés (38 et 40) des côtés transversaux sont conformées de manière identique.

5. Appareil de chauffage selon la revendication 3 ou 4, **caractérisé en ce que** les moitiés (38 et 40) des côtés transversaux présentent des surfaces d'appui (42 à 48) qui sont contiguës aux surfaces en forme de coin (50 à 56).

6. Appareil de chauffage selon l'une quelconque des revendications 1 à 5, **caractérisé en ce que** les côtés du cadre sont en métal, de préférence en aluminium, et sont conformés comme des profilés filés à la presse.

7. Appareil de chauffage selon l'une quelconque des revendications précédentes, **caractérisé en ce qu'**il est prévu une isolation électrique entre le bloc chauffant (18) et les côtés longitudinaux (30 et 32).

8. Appareil de chauffage selon l'une quelconque des revendications 3 à 7, **caractérisé en ce que** les moitiés (38 et 40) des côtés transversaux peuvent être assemblées l'une à l'autre de façon démontable.

9. Appareil de chauffage selon l'une quelconque des revendications 3 à 8, **caractérisé en ce que** les moitiés (38 et 40) des côtés transversaux présentent des éléments de fixation (62) servant à la fixation des tôles (20).

10. Appareil de chauffage selon la revendication 9, **caractérisé en ce que** deux moyens de fixation (62 et 62'), placés respectivement l'un en face de l'autre lorsque l'appareil de chauffage (10) est monté, fonctionnent en coopération et fixent entre eux une tôle (20) d'un élément chauffant (14).

11. Appareil de chauffage selon la revendication 9 ou 10, **caractérisé en ce qu'**une tôle (20) d'un élément chauffant sur deux (14) est fixée par les moyens de fixation (62) et, à chaque fois, une tôle (20') des autres éléments chauffants (14') présente à chaque fois un élément de connexion électrique (21).

12. Appareil de chauffage selon l'une quelconque des revendications précédentes, **caractérisé en ce que** chaque élément chauffant (14) présente une connexion électrique (21).

13. Appareil de chauffage selon l'une quelconque des revendications précédentes, **caractérisé en ce que** au moins l'un des côtés du cadre présente une partie pleine dépassant vers l'extérieur.
